# EUROPEAN PATENT APPLICATION

(11) **EP 2 863 327 A1**
(43) Date of publication of application: **22.04.2015**
(21) Application number: 14382351.6
(22) Date of filing: 17.09.2014
(51) Int. Cl.: G06F 17/30

(54) **System and method for dynamically establishing access to external content on a webpage**

(30) Priority: 17.09.2013 ES 201331345
(71) Applicant: Net Aldeli, S.L., 28012 Madrid (ES)
(72) Inventor: De Linaje Garcia, Carlos Alonso, 28012 Madrid (ES)
(74) Representative: Carvajal y Urquijo, Isabel

(57) **Abstract**

A system and method for dynamically establishing access to external content on a webpage (10) in a device (13) by means of embedding a function (21) in the webpage (10) stored on an origin server (11), wherein the function (21), when running on the device (13), performs the following actions: generating a first piece of information from the webpage (10), said first piece of information (31) being related to an identifier of an image (22) on the webpage; transmitting the first piece of information (31) to an external server (12); receiving additional information (32) linked to the first piece of information (31) in response to the first piece of information (31) transmitted to the external server (12) and; generating a link (35) on the webpage (10) to access the external content linked to the additional information (32) via a service provider (15).

## Description

### Technical field of the invention

The present invention falls within the field of information technology, specifically for the dynamic generation of web page content via operating systems in the web browser itself.

### State of the art

Current systems are capable of adding and expanding content or gathering information but cannot link actions to image content on a website.

For example, the proposal in international patent application WO0215053 is known about and describes how to add and update website content. It therefore requires a template and the location of each article in which to add content. A location must therefore exist inside, in order to incorporate extra content. This presents various limitations, such as having to locate the extra content from space to space, having to adapt it for each container and having to use specific space, therefore making it necessary to change the original content of the container, in order to store the template.

### Brief description of the invention

The present invention resolves the limitations of the state of the art and does not require a template or location. It is installed dynamically and automatically enables an icon above photos, images and videos on the webpage, which grants access to said additional content preferably stored in another server. The need to indicate where the content should be placed is therefore avoided, since the same is automatically linked by means of consulting a database.

These and other advantages are achieved using a new method and system for dynamically establishing access to external content on a webpage.

The method for dynamically establishing access to external content on a webpage on a user device comprises the following steps:
- enabling a function to be embedded on the webpage stored on an origin server, where the function, when running on a device, performs the following actions:
- generating a first piece of information using the webpage itself, said first piece of information being related to an identifier of an image on the webpage,
- transmitting the first piece of information to an external server,
- receiving additional information in response to the first piece of information transmitted to the external server, with said piece of additional information being linked to the first piece of information and
- generating a link on the webpage in order to access the external content linked to the additional information via a service provider.

In order to form the image identifier, the function optionally locates linked HTML code tags, the feature of which is linked to images and/or videos and extracts their value and the associated HTML content.

The link generated is viewed as an icon linked to the image by a webpage identifier.

Clicking on the webpage link optionally gives rise to at least one of the following actions on the user device:
- generating a pop-up window or
- opening an additional webpage.

The external server optionally makes a comparison using the first piece of information in a database including data on at least one object represented in the image or video and a provider for said object.

The function is optionally a JavaScript.

The user device is optionally selected from one of the following: a PC, mobile phone, laptop, smart TV or tablet.

Moreover, the system for dynamically establishing access to external content on a webpage on a user device incorporates means for embedding a function on the webpage stored on an origin server, where the function, when loaded on a device, performs the following actions:
- generating a first piece of information using the webpage itself, said first piece of information being related to an identifier of an image on the webpage,
- transmitting the first piece of information to an external server,
- receiving additional information in response to the first piece of information transmitted to the external server, with said piece of additional information being linked to the first piece of information,
- generating a link on the webpage to access the external content linked to the additional piece of information via a service provider.

The means for embedding the function on the webpage are optionally configured to explore the origin server and to select a multitude of webpages according to a pre-established criterion in which to embed said function.

The means for embedding the function optionally explore the origin server periodically.

Alternatively, the means for embedding the function explore the origin server in response to a modification on at least one webpage stored there.

### Brief description of the drawings

In order to complement the description, with the aim of facilitating a better understanding of the invention characteristics, the present specification is accompanied by a set of drawings, which form an intrinsic part thereof.

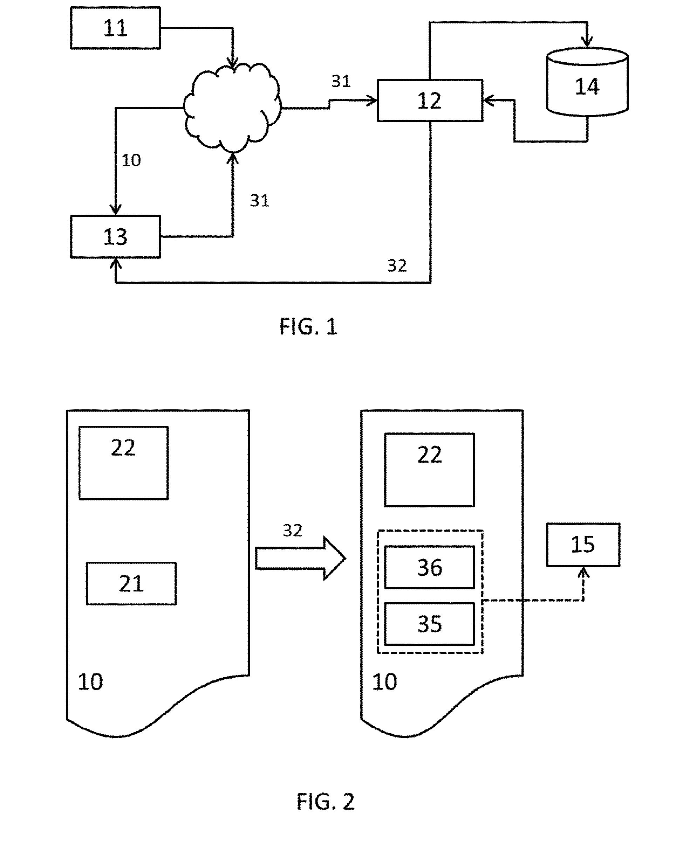

Figure 1 is a block diagram showing the various entities involved.
Figure 2 is a schematic representation of the webpage before and after adding a link to access the external content.

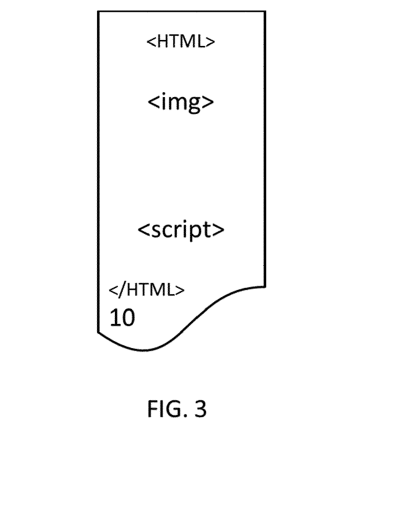

Figure 3 is a schematic representation of a webpage code.

### Detailled description of the invention

The present invention is additionally illustrated in the following exemplary embodiment, which is by no means limiting in scope.

Starting with a conventional webpage, it is possible to add new functionalities and services, using a function embedded in the webpage 10 HTML code.

When the end user downloads the content of the webpage 10, the function 21 runs dynamically and analyses the photos on the webpage 10, optionally alongside the content, in order to dynamically place buttons in the form of icons 36 above the images 22 (be they photos or videos).

Pushing these buttons causes a layer to open on the webpage 10, thus adding functionality linked to the image 22, preferably without leaving the current location, so that the user does not lose their place at all. Clicking the icon 36 linked to the button might also mean opening a link 35 with which to access a service provider 15 linked to the image 22.

The link is generally made using the image identifier in the HTML code. For example, an image 22 is shown on the webpage 10, the identifier of which makes it possible to know (by consulting a database 14), what is related to a given product (or products); by clicking on the icon 36, the function 12 may cause a pop-up window containing additional information to be generated or in other words, a pop up window containing data on said product (technical characteristics, availability and price, etc.).

In general, the invention solves the problem of adding external content linked to an image, regardless of whether or not this content is of a commercial nature. The present embodiment is particularly advantageous for the digital publishing, newspaper and magazine world, since the publisher does not have to do anything special within their origin server 10, nor do they have to carry out developments or access an external database 14. All operations are carried out via the function 21. There is also no need to use a template, link, tag signalling of any kind, thus resolving the problems identified in the state of the art. The publishing house must only grant the filing system that stores the webpages 10 access, so that it can be embed the function 21 into the code of the webpages 10. Said function 21 will be responsible for incorporating a button with an icon, which when clicked, facilitates access to the specific content linked to the image 22. In order to do so, a database 14 should be consulted and the additional information 32 should be recovered as external content, using the first piece of information 31 extracted from the webpage as a starting point. The first piece of information 31 is usually formed by an image 22 identifier, with which it is possible to search in a database 14 containing additional information 32 generally referring to product data appearing in said specific image 22. This task is carried out in an external server 12 in a transparent way for both the user and the publisher. For example, should various products (for example a watch, a t-shirt, etc.,) appear in a photo, it is possible to generate a window with data linked to said products (brand, supplier, price and availability, etc). Upon opening said window in their device 13 browser, the user may consult this data or buy the product via a service provider 15.

Example using a basic HTML code:

```
 <html><head>
 <title>Example</title>
 </head><body><img id="" src="img/demo.gif"/>
 </body></html>
```

In which the following integration is included:

```
 <script type="text/javascript">
 document.write(unescape("%3Cscript
 src='http://cdn.brokerfashion.com/js/webs/web_demo.js?r="+Math.random()+"'
 type='text/javascript'%3E%3C/script%3E"));</script>
```

Therefore giving:

```
 <html><head>
 <title>Example</title>
 </head><body><img id="" src="img/demo.gif"/>
 <script type="text/javascript">
 document.write(unescape("%3Cscript
 src='http://cdn.brokerfashion.com/js/webs/web_demo.js?r="+Math.random()+"'
 type='text/javascript'%3E%3C/script%3E"));</script>
 </body></html>
```

Upon being viewed in a browser on a user device 13, the code checks that there is additional information 31 in the database 14 in the third remote server for <img id="" src="img/demo.gif"/> and, should such information exist, it views it as extra content.

## Claims

1. A method for dynamically establishing access to external content on a webpage (10) on a user device (13), **characterised in that** it comprises the following steps:
- enabling a function (21) to be embedded in the webpage (10) stored in an origin server (11), wherein the function (21), when running on the device (13), performs the following actions:
- generating a first piece of information based on the webpage (10) itself, said first piece of information (31) being related to an identifier of an image (22) on the webpage (10),
- transmitting the first piece of information (31) to an external server (12),
- receiving additional information (32) in response to the first piece of information (31) transmitted to the external server (12), said additional information (32) being linked to the first piece of information (31),
- generating a link (35) on the webpage (10) in order to access the external content linked to the additional information (32) via a service provider (15).

2. The method according to claim 1, wherein, in order to form the image (22) identifier, the function locates associated HTML code tags, the feature of which is linked to images and/or videos and extracts its value and the associated HTML content.

3. The method according to claim 2, wherein the link (35) generated is viewed as an icon (36) linked to the image with an identifier on the webpage (10)

4. The method according to any one of the claims 1 to 3, wherein clicking on the link (35) on the webpage (10) gives rise to at least one of the following actions on the user device (13):
- generating a pop-up window,
- opening an additional web page.

5. The method according to any of the claims 1 to 4, wherein the external server (12) makes a comparison based on the first piece of information (31) in a database (14) including data on at least one object represented in the image or video and a provider (15) of said object.

6. The method according to claim 5, wherein the function is a JavaScript.

7. The method according to one of the claims 4 to 6, wherein the user device (13) is selected from one of the following:
- a PC,
- a mobile phone,
- a laptop computer,
- a smart TV,
- a tablet.

8. A system for dynamically establishing access to external content on a webpage (10) on a user device (13), **characterised in that** it comprises means for embedding a function (21) in the webpage (10) stored on an origin server (11), wherein the function (21), when running on a device (13), performs the following actions:
- generating a first piece of information from the webpage itself (10), with said first piece of information (31) being related to an identifier of an image (22) on the webpage (10),
- transmitting the first piece of information (31) to an external server (12),
- receiving additional information (32) in response to the first piece of information (31) transmitted to the external server (12), said additional information (32) being linked to the first piece of information (31) and
- generating a link (35) on the webpage (10) to access the external content linked to the additional information (32) via a service provider (15).

9. The system according to claim 8, wherein the means for embedding the function (21) in a webpage (10) are configured to explore the origin server (11) and to select a plurality of webpages (10) according to pre-established criteria in which to embed said function (21).

10. The system according to claim 9, wherein the means for embedding the function (21) explore the origin server (10) periodically.

11. The system according to claim 9, wherein the means for embedding the function (21) explore the origin server (10) in response to a modification in at least one webpage (10) stored there.
